# EUROPEAN PATENT APPLICATION

(11) **EP 2 234 238 A1**
(43) Date of publication of application: **29.09.2010**
(21) Application number: 08870221.2
(22) Date of filing: 16.10.2008
(51) Int. Cl.: H02J 7/00, B60K 6/448, B60L 11/18, H01M 10/44

(54) **VEHICLE CHARGE CONTROL APPARATUS AND VEHICLES**

(30) Priority: 11.01.2008 JP 2008004636
(71) Applicant: Toyota Jidosha Kabushiki Kaisha, Toyota-shi, Aichi 471-8571 (JP)
(72) Inventor: ITO, Takahiro, Toyota-shi Aichi 471-8571 (JP); KAMAGA, Ryuichi, Toyota-shi Aichi 471-8571 (JP); INOUE, Yuki, Toyota-shi Aichi 471-8571 (JP); KARAMI, Masahiro, Kariya-shi Aichi 448-8661 (JP)
(74) Representative: Kuhnen & Wacker
(86) International application number: PCT/JP2008/068711
(87) International publication number: WO 2009/087799

(57) **Abstract**

An EVSE controller (334) generates a pilot signal (CPLT) and sends the pilot signal (CPLT) to a vehicle. A resistance circuit (502) is connected to a control pilot line (L1) through which the pilot signal (CPLT) is transmitted, and is configured to be capable of reducing the potential of the pilot signal (CPLT) to a prescribed potential in accordance with a state of the vehicle. A pull-down resistance (R4) and a switch (SW2) are serially connected between the control pilot line (L1) and a ground line (L2). A CPU (508) turns on the switch (SW2) when sensing an abnormality in the pilot signal (CPLT).

## Description

### TECHNICAL FIELD

The present invention relates to a charging control apparatus for a vehicle and a vehicle. In particular, the present invention relates to a charging control apparatus for a vehicle and a vehicle configured to be capable of charging a power storage device for driving the vehicle from a power supply external to the vehicle.

### BACKGROUND ART

In recent years, an electric vehicle, a hybrid vehicle, a fuel cell vehicle and the like have received attention as an environmentally-friendly vehicle. On these vehicles, a motor that generates driving force for traveling as well as a power storage device that stores electric power supplied to the motor are mounted. The hybrid vehicle further has an internal combustion engine mounted thereon as a power source, together with the motor. The fuel cell vehicle has a fuel cell mounted thereon as a direct current (DC) power supply for driving the vehicle.

Among these vehicles, a vehicle is known in which a vehicle-mounted power storage device for driving the vehicle can be charged from a power supply in ordinary households. For example, a power supply outlet provided at home is connected to a charging port provided at the vehicle by using a charging cable, so that electric power is supplied from the power supply in the ordinary households to the power storage device. It is noted that the vehicle in which the vehicle-mounted power storage device can be charged from the power supply external to the vehicle as described above will also be referred to as "plug-in vehicle" hereinafter.

In the plug-in vehicle as described above, Japanese Patent Laying-Open No. 2000-270484 (Patent Document 1) discloses an abnormality detecting apparatus capable of detecting an abnormality that occurs during charging of a power storage device from a power supply external to the vehicle. According to this abnormality detecting apparatus, an abnormality such as a break in the power supply external to the vehicle and a power failure can be detected based on an alternating current command value as well as an alternating current flowing through a coil, after charging of the power storage device from the power supply external to the vehicle starts.

The standard for the plug-in vehicle as described above is defined in "SAE Electric Vehicle Conductive Charge Coupler" (Non-Patent Document 1) in the United States of America, and in "Electric Vehicle Conductive Charging System, General Requirements" (Non-Patent Document 2) in Japan.

In "SAE Electric Vehicle Conductive Charge Coupler" and "Electric Vehicle Conductive Charging System, General Requirements," the standard for a control pilot is defined as an example. The control pilot is defined as a control line that connects, via a control circuit on the vehicle side, a ground of the vehicle and a control circuit of EVSE (Electric Vehicle Supply Equipment) for supplying electric power from an on-premises wiring to the vehicle. Based on a pilot signal communicated through this control line, a connection state of the charging cable, whether or not electric power is supplied from the power supply to the vehicle, a rated current of the EVSE and the like are determined.
Patent Document 1: Japanese Patent Laying-Open No. 2000-270484
Non-Patent Document 1: "SAE Electric Vehicle Conductive Charge Coupler," SAEJ1772, SAE International, November, 2001
Non-Patent Document 2: "Japan Electric Vehicle Association Standard, Electric Vehicle Conductive Charging System; General Requirements," Japan Electric Vehicle Association, March 29, 2001

### DISCLOSURE OF THE INVENTION

### PROBLEMS TO BE SOLVED BY THE INVENTION

"SAE Electric Vehicle Conductive Charge Coupler" and "Electric Vehicle Conductive Charging System, General Requirements," however, do not particularly define the details of a technique of detecting a break in the control line through which the pilot signal is communicated. For example, based on only a simple fact that the potential of the control line is in the ground level, a distinction cannot be made between a break in the control line and non-feeding from the power supply (at the time of a power failure in the power supply, when the charging cable is not connected to the power supply outlet, and the like).

As described above, the pilot signal is essential for charging control in the plug-in vehicle, and detection of an abnormality in the pilot signal, particularly detection of a break in the control line through which the pilot signal is communicated, is extremely important in the plug-in vehicle.

In addition, the abnormality detecting apparatus disclosed in Japanese Patent Laying-Open No. 2000-270484 is useful in that it can detect an abnormality such as a break in the power supply external to the vehicle and a power failure. A technique of detecting an abnormality when the above pilot signal is applied is not considered, however.

Thus, the present invention has been made to solve the above problems, and an object thereof is to provide a charging control apparatus for a vehicle and a vehicle capable of distinguishing between and detecting non-feeding from a power supply and a break in a control line through which a pilot signal is communicated.

### MEANS FOR SOLVING THE PROBLEMS

According to the present invention, a charging control apparatus for a vehicle is a charging control apparatus for a vehicle configured to be capable of charging a vehicle-mounted power storage device for driving the vehicle from a power supply external to the vehicle, including: an EVSE controller, a potential manipulating circuit and a resistance element. The EVSE controller is provided outside the vehicle and configured to be capable of generating a pilot signal whose potential is manipulated on the vehicle side to allow recognition of a state of the vehicle, and sending the pilot signal to the vehicle. The potential manipulating circuit is mounted on the vehicle, connected to a control pilot line through which the pilot signal from the EVSE controller is transmitted, and configured to be capable of reducing the potential of the pilot signal to a prescribed potential in accordance with the state of the vehicle. The resistance element is provided between the control pilot line and a ground node and closer to the EVSE controller with respect to a predetermined area where a break in the control pilot line can be detected, and lowers a potential of the control pilot line to the prescribed potential when an abnormality in the pilot signal is sensed in the vehicle.

Preferably, the pilot signal is provided to the vehicle through a charging cable for supplying electric power to the vehicle from the power supply external to the vehicle. The resistance element is provided in proximity to a vehicle inlet of the vehicle to which the charging cable is connected.

Preferably, the charging control apparatus for a vehicle further includes a switch. The switch is connected between the control pilot line and the ground node and in series with the resistance element, and is turned on when the abnormality in the pilot signal is sensed in the vehicle.

Preferably, the charging control apparatus for a vehicle further includes a relay. The relay is provided at a charging cable for supplying electric power to the vehicle from the power supply external to the vehicle, and is turned on/off in accordance with a provided command. The EVSE controller includes a first voltage detecting device for detecting the potential of the pilot signal, and outputs a connection command to the relay when the potential detected by the first voltage detecting device is lowered to the prescribed potential.

More preferably, the charging control apparatus for a vehicle further includes: a second voltage detecting device and an abnormality detecting device. The second voltage detecting device detects, in the vehicle, a voltage of a power line for inputting the electric power from the power supply. The abnormality detecting device detects the break in the control pilot line and non-feeding from the power supply, based on the voltage detected by the second voltage detecting device and the pilot signal.

More preferably, the abnormality detecting device determines that the break in the control pilot line is occurring, when there is no input of the pilot signal and the voltage of the power supply is detected by the second voltage detecting device.

In addition, more preferably, the abnormality detecting device determines that there is no feeding from the power supply, when there is no input of the pilot signal and the voltage of the power supply is not detected by the second voltage detecting device.

In addition, according to the present invention, a vehicle is a vehicle configured to be capable of charging a power storage device for driving the vehicle from a power supply external to the vehicle, including: a control pilot line, a potential manipulating circuit and a resistance element. The control pilot line transmits a pilot signal generated outside the vehicle and whose potential is manipulated in the vehicle to allow recognition of a state of the vehicle outside the vehicle. The potential manipulating circuit is connected to the control pilot line and configured to be capable of reducing the potential of the pilot signal to a prescribed potential in accordance with the state of the vehicle. The resistance element is provided between the control pilot line and a ground node and closer to a terminal for inputting the pilot signal from outside the vehicle with respect to a predetermined area where a break in the control pilot line can be detected, and lowers a potential of the control pilot line to the prescribed potential when an abnormality in the pilot signal is sensed.

Preferably, the pilot signal is provided to the vehicle through a charging cable for supplying electric power to the vehicle from the power supply external to the vehicle. The resistance element is provided in proximity to a vehicle inlet to which the charging cable is connected.

Preferably, the vehicle further includes a switch. The switch is connected between the control pilot line and the ground node and in series with the resistance element, and is turned on when the abnormality in the pilot signal is sensed.

Preferably, the vehicle further includes: a voltage detecting device and an abnormality detecting device. The voltage detecting device detects a voltage of a power line for inputting electric power from the power supply. The abnormality detecting device detects the break in the control pilot line and non-feeding from the power supply, based on the voltage detected by the voltage detecting device and the pilot signal.

More preferably, the abnormality detecting device determines that the break in the control pilot line is occurring, when there is no input of the pilot signal and the voltage of the power supply is detected by the voltage detecting device.

In addition, more preferably, the abnormality detecting device determines that there is no feeding from the power supply, when there is no input of the pilot signal and the voltage of the power supply is not detected by the voltage detecting device.

Preferably, the vehicle further includes a charger for converting electric power supplied from the power supply external to the vehicle to a voltage level of the power storage device and charging the power storage device.

### EFFECTS OF THE INVENTION

In the present invention, the resistance element for lowering the potential of the control pilot line to the prescribed potential when the abnormality in the pilot signal is sensed in the vehicle is provided. Therefore, even if the potential manipulating circuit fails to function due to the break in the control pilot line, connection of the vehicle and the charging cable can be sensed in the EVSE controller, based on lowering of the potential of the pilot signal to the prescribed potential. As a result, on the precondition that the vehicle is connected to the charging cable, the power supply voltage and the pilot signal can be detected at the same time on the vehicle side by turning on the relay of the charging cable. When the pilot signal is not detected although the power supply voltage is detected, it can be determined that the break in the control pilot line is occurring, and when the power supply voltage is not detected, it can be determined that there is no feeding from the power supply.

Therefore, according to the present invention, non-feeding from the power supply external to the vehicle and the break in the control pilot line through which the pilot signal is transmitted can be distinguished and detected.

### BRIEF DESCRIPTION OF THE DRAWINGS

Fig. 1 is an overall block diagram of a plug-in hybrid vehicle shown as an example of a vehicle to which a charging control apparatus according to an embodiment of the present invention is applied.
Fig. 2 illustrates a collinear chart of a power split device.
Fig. 3 is an overall configuration diagram of an electrical system in the plug-in hybrid vehicle shown in Fig. 1.
Fig. 4 is a schematic configuration diagram of a portion related to a charging mechanism of the electrical system shown in Fig. 3.
Fig. 5 illustrates a waveform of a pilot signal generated by an EVSE controller shown in Fig. 4.
Fig. 6 illustrates the charging mechanism shown in Fig. 4 in more detail.
Fig. 7 is a timing chart of the pilot signal and switches.
Fig. 8 illustrates a zero-phase equivalent circuit of first and second inverters as well as first and second MGs shown in Fig. 3.
Fig. 9 is an overall configuration diagram of an electrical system in a plug-in hybrid vehicle on which a charger designed for charging of a power storage device from a power supply is mounted.
Fig. 10 is a schematic configuration diagram of a portion related to a charging mechanism of the electrical system shown in Fig. 9.

### DESCRIPTION OF THE REFERENCE SIGNS

100 engine; 110 first MG; 112, 122 neutral point; 120 second MG; 130 power split device; 140 reduction gear; 150 power storage device; 160 front wheel; 170 ECU; 171, 604 voltage sensor; 172 current sensor; 210 first inverter; 210A, 220A upper arm; 210B, 220B lower arm; 220 second inverter; 250 SMR; 260 DFR; 270 charging inlet; 280 LC filter; 294 charger; 300 charging cable; 310 connector; 312 limit switch; 320 plug; 330 CCID; 332 relay; 334 EVSE controller; 400 power supply outlet; 402 power supply; 502 resistance circuit; 504, 506 input buffer; 508 CPU; 512 vehicle earth; 602 oscillator; 606 electromagnetic coil; 608 leakage detector; R1 resistance element; R2-R4 pull-down resistance; SW1, SW2 switch; L1 control pilot line; L2 ground line; L3 signal line

### BEST MODES FOR CARRYING OUT THE INVENTION

Embodiments of the present invention will be hereinafter described in detail with reference to the drawings. The same or corresponding portions are represented by the same reference characters in the drawings, and description thereof will not be repeated.

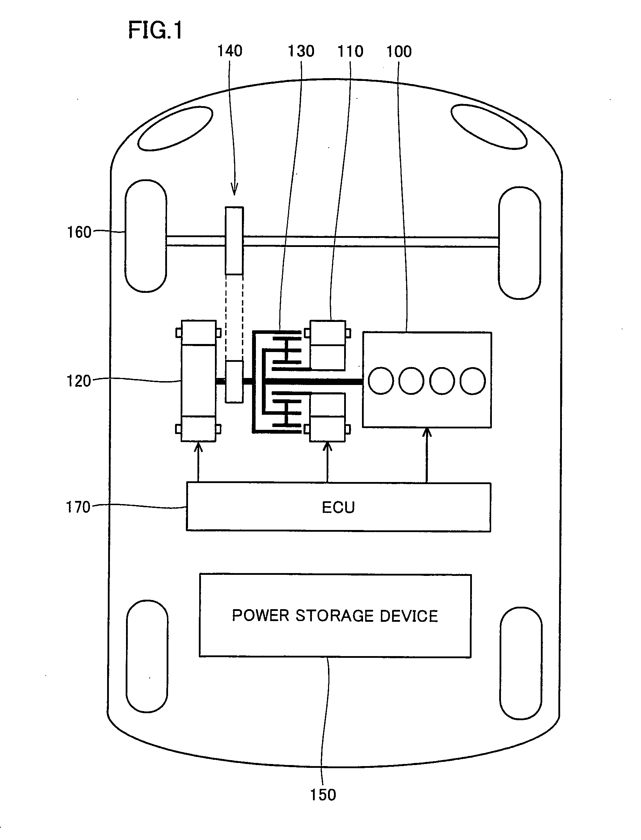

Fig. 1 is an overall block diagram of a plug-in hybrid vehicle shown as an example of a vehicle to which a charging control apparatus according to an embodiment of the present invention is applied. Referring to Fig. 1, this plug-in hybrid vehicle includes an engine 100, a first MG (Motor Generator) 110, a second MG 120, a power split device 130, a reduction gear 140, a power storage device 150, a drive wheel 160, and an ECU 170.

Engine 100, first MG 110 and second MG 120 are coupled to power split device 130. This plug-in hybrid vehicle travels by using driving force from at least one of engine 100 and second MG 120. Motive power generated by engine 100 is split by power split device 130 into two paths, that is, one path through which the motive power is transmitted to drive wheel 160 via reduction gear 140, and the other through which the motive power is transmitted to first MG 110.

Each of first MG 110 and second MG 120 is an alternating current (AC) rotating electric machine, and is a three-phase AC synchronous motor including a U-phase coil, a V-phase coil and a W-phase coil, for example. First MG 110 generates electric power by using the motive power of engine 100 split by power split device 130. For example, when a state of charge (that will also be referred to as "SOC (State of Charge)" hereinafter) of power storage device 150 falls below a predetermined value, engine 100 starts and electric power is generated by first MG 110. The electric power generated by first MG 110 is converted from AC to DC by an inverter (that will be described hereinafter), voltage thereof is adjusted by a converter (that will be described hereinafter), and then the electric power is stored in power storage device 150.

Second MG 120 generates driving force by using at least one of the electric power stored in power storage device 150 and the electric power generated by first MG 110. The driving force of second MG 120 is transmitted to drive wheel 160 via reduction gear 140. As a result, second MG 120 assists engine 100 or causes the ' vehicle to travel by using the driving force from second MG 120. Although drive wheel 160 is shown as a front wheel in Fig. 1, a rear wheel may be driven by second MG 120, instead of the front wheel or together with the front wheel.

It is noted that, at the time of braking and the like of the vehicle, second MG 120 is driven by drive wheel 160 via reduction gear 140, and second MG 120 is operated as a generator. As a result, second MG 120 is operated as a regenerative brake for converting braking energy to electric power. The electric power generated by second MG 120 is stored in power storage device 150.

Power split device 130 is formed of a planetary gear including a sun gear, a pinion gear, a carrier, and a ring gear. The pinion gear engages the sun gear and the ring gear. The carrier rotatably supports the pinion gear, and in addition, is coupled to a crankshaft of engine 100. The sun gear is coupled to a rotation shaft of first MG 110. The ring gear is coupled to a rotation shaft of second MG 120 and reduction gear 140.

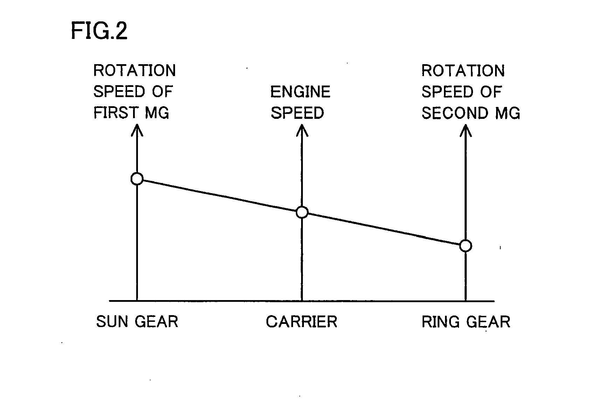

Engine 100, first MG 110 and second MG 120 are coupled with power split device 130 formed of the planetary gear being interposed therebetween, so that the relationship between rotation speeds of engine 100, first MG 110 and second MG 120 is such that they are connected by a straight line in a collinear chart as shown in Fig. 2.

Referring again to Fig. 1, power storage device 150 is a rechargeable DC power supply, and is formed of a secondary battery such as nickel-metal hydride and lithium ion, for example. The voltage of power storage device 150 is, for example, about 200V. In addition to the electric power generated by first MG 110 and second MG 120, electric power supplied from a power supply external to the vehicle is stored in power storage device 150, as will be described hereinafter. It is noted that a large-capacitance capacitor can also be employed as power storage device 150, and any electric power buffer may be employed if it can temporarily store the electric power generated by first MG 110 and second MG 120 as well as the electric power from the power supply external to the vehicle and supply the stored electric power to second MG 120.

Engine 100, first MG 110 and second MG 120 are controlled by ECU 170. It is noted that ECU 170 may be divided into a plurality ofECUs for each function. It is noted that a configuration of ECU 170 will be described hereinafter.

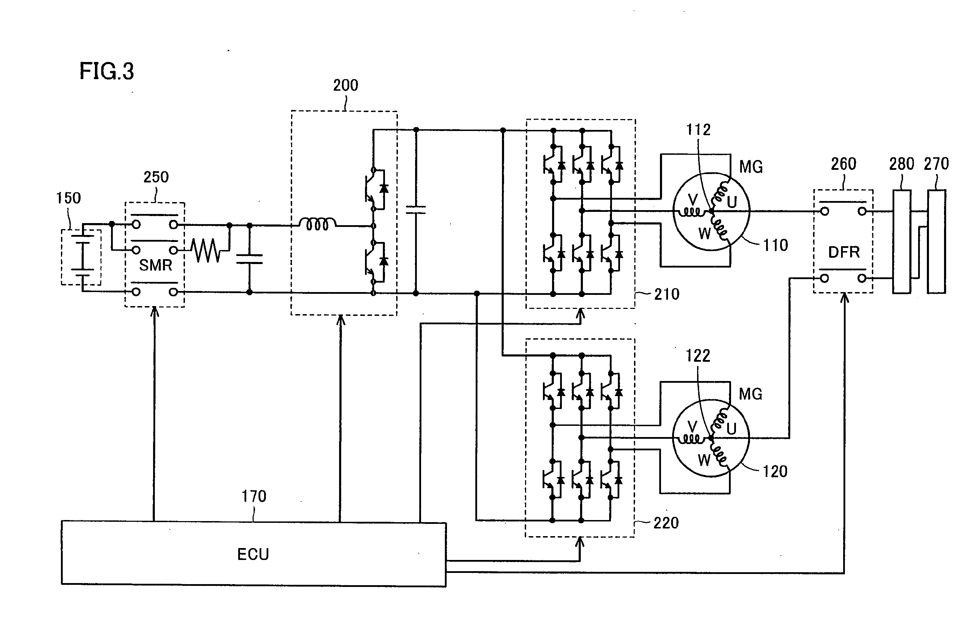

Fig. 3 is an overall configuration diagram of an electrical system in the plug-in hybrid vehicle shown in Fig. 1. Referring to Fig. 3, this electrical system includes power storage device 150, an SMR (System Main Relay) 250, a converter 200, a first inverter 210, a second inverter 220, first MG 110, second MG 120, a DFR (Dead Front Relay) 260, an LC filter 280, and a charging inlet 270.

SMR 250 is provided between power storage device 150 and converter 200. SMR 250 is a relay for electrically connecting/disconnecting power storage device 150 and the electrical system, and on/off of SMR 250 is controlled by ECU 170. In other words, when the vehicle travels and when power storage device 150 is charged from the power supply external to the vehicle, SMR 250 is turned on, and power storage device 150 is electrically connected to the electrical system. On the other hand, when the vehicle system stops, SMR 250 is turned off, and power storage device 150 is electrically disconnected from the electrical system.

Converter 200 includes a reactor, two npn-type transistors and two diodes. The reactor has one end connected to the positive electrode side of power storage device 150, and the other end connected to a connection node of the two npn-type transistors. The two npn-type transistors are connected in series, and each npn-type transistor has the diode connected in antiparallel.

It is noted that an IGBT (Insulated Gate Bipolar Transistor), for example, can be used as the npn-type transistor. Furthermore, a power switching element such as a power MOSFET (Metal Oxide Semiconductor Field-Effect Transistor) may be used instead of the npn-type transistor.

When electric power is supplied from power storage device 150 to first MG 110 or second MG 120, converter 200 boosts the electric power discharged from power storage device 150 and supplies the electric power to first MG 110 or second MG 120, based on a control signal from ECU 170. Furthermore, when power storage device 150 is charged, converter 200 steps down the electric power supplied from first MG 110 or second MG 120 and outputs the electric power to power storage device 150.

First inverter 210 includes a U-phase arm, a V-phase arm and a W-phase arm. The U-phase arm, the V-phase arm and the W-phase arm are connected in parallel. Each phase arm includes two npn-type transistors connected in series, and each npn-type transistor has a diode connected in antiparallel. A connection point between the two npn-type transistors in each phase arm is connected to an end of a corresponding coil in first MG 110 that is different from a neutral point 112.

First inverter 210 converts DC electric power supplied from converter 200 to AC electric power, and supplies the converted AC electric power to first MG 110. Furthermore, first inverter 210 converts AC electric power generated by first MG 110 to DC electric power, and supplies the converted DC electric power to converter 200.

Second inverter 220 also has a configuration similar to that of first inverter 210. A connection point between two npn-type transistors in each phase arm is connected to an end of a corresponding coil in second MG 120 that is different from a neutral point 122.

Second inverter 220 converts DC electric power supplied from converter 200 to AC electric power, and supplies the converted AC electric power to second MG 120. Furthermore, second inverter 220 converts AC electric power generated by second MG 120 to DC electric power, and supplies the converted DC electric power to converter 200.

In addition, when power storage device 150 is charged from the power supply external to the vehicle, first inverter 210 and second inverter 220 convert AC electric power provided from the power supply external to the vehicle to neutral point 112 of first MG 110 and neutral point 122 of second MG 120, to DC electric power, based on a control signal from ECU 170, and supply the converted DC electric power to converter 200 by using a method that will be described hereinafter.

DFR 260 is provided between a pair of power lines connected to neutral points 112, 122 and a pair of power lines connected to LC filter 280. DFR 260 is a relay for electrically connecting/disconnecting charging inlet 270 and the electrical system, and on/off of DFR 260 is controlled by ECU 170. In other words, when the vehicle travels, DFR 260 is turned off, and charging inlet 270 is electrically separated from the electrical system. On the other hand, when power storage device 150 is charged from the power supply external to the vehicle, DFR 260 is turned on, and charging inlet 270 is electrically connected to the electrical system.

LC filter 280 is provided between DFR 260 and charging inlet 270, and prevents output of a high-frequency noise from the electrical system of the plug-in hybrid vehicle to the power supply external to the vehicle when power storage device 150 is charged from the power supply external to the vehicle.

Charging inlet 270 serves as an electric power interface for receiving charging electric power from the power supply external to the vehicle. When power storage device 150 is charged from the power supply external to the vehicle, a connector of a charging cable through which electric power is supplied to the vehicle from the power supply external to the vehicle is connected to charging inlet 270.

ECU 170 generates the control signals for driving SMR 250, converter 200, first inverter 210, second inverter 220, and DFR 260, and controls the operation of each of these devices.

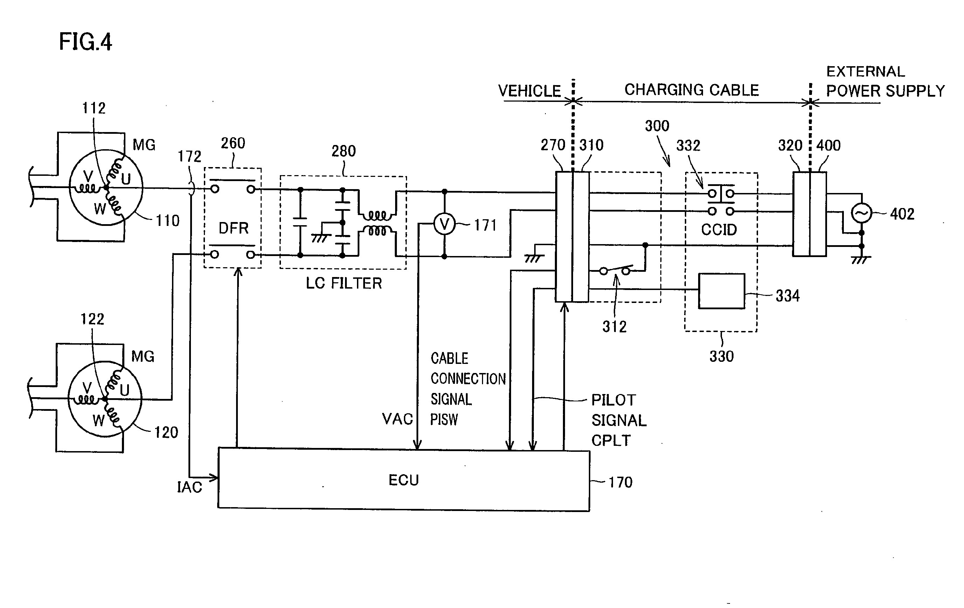

Fig. 4 is a schematic configuration diagram of a portion related to a charging mechanism of the electrical system shown in Fig. 3. Referring to Fig. 4, a charging cable 300 for coupling the plug-in hybrid vehicle and the power supply external to the vehicle includes a connector 310, a plug 320 and a CCID (Charging Circuit Interrupt Device) 330.

Connector 310 is configured to be capable of being connected to charging inlet 270 provided at the vehicle. A limit switch 312 is provided at connector 310. When connector 310 is connected to charging inlet 270, limit switch 312 is activated, and a cable connection signal PISW indicating that connector 310 is connected to charging inlet 270 is input to ECU 170.

Plug 320 is connected to a power supply outlet 400 provided at home, for example. AC electric power is supplied from a power supply 402 (for example, a system power supply) to power supply outlet 400.

CCID 330 includes a relay 332 and an EVSE controller 334. Relay 332 is provided at a pair of power lines through which charging electric power is supplied from power supply 402 to the plug-in hybrid vehicle. On/off of relay 332 is controlled by EVSE controller 334. When relay 332 is turned off, a conducting path through which electric power is supplied from power supply 402 to the plug-in hybrid vehicle is disconnected. On the other hand, when relay 332 is turned on, electric power can be supplied from power supply 402 to the plug-in hybrid vehicle.

When plug 320 is connected to power supply outlet 400, EVSE controller 334 is operated by the electric power supplied from power supply 402. EVSE controller 334 generates a pilot signal CPLT to be sent to ECU 170 of the vehicle through a control pilot line. When connector 310 is connected to charging inlet 270 and the potential of pilot signal CPLT is lowered to a prescribed value, EVSE controller 334 causes pilot signal CPLT to oscillate in a prescribed duty cycle (a ratio of a pulse width to an oscillation cycle).

This duty cycle is set based on a rated current that can be supplied from power supply 402 through charging cable 300 to the vehicle.

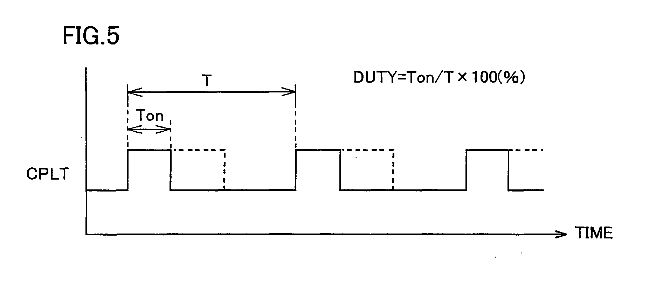

Fig. 5 illustrates a waveform of pilot signal CPLT generated by EVSE controller 334 shown in Fig. 4. Referring to Fig. 5, pilot signal CPLT oscillates in a prescribed cycle T. Here, a pulse width Ton of pilot signal CPLT is set based on the rated current that can be supplied from power supply 402 through charging cable 300 to the vehicle. The notification of the rated current is provided from EVSE controller 334 to ECU 170 of the vehicle by using pilot signal CPLT, in accordance with the duty indicated by a ratio of pulse width Ton to cycle T.

It is noted that the rated current is defined for each charging cable. Depending on the type of the charging cable, the rated current varies, and therefore, the duty of pilot signal CPLT also varies. ECU 170 of the vehicle receives, through the control pilot line, pilot signal CPLT sent from EVSE controller 334 provided at charging cable 300, and senses the duty of received pilot signal CPLT, so that ECU 170 of the vehicle can sense the rated current that can be supplied from power supply 402 through charging cable 300 to the vehicle.

Referring again to Fig. 4, EVSE controller 334 causes relay 332 to be turned on when preparation for charging is completed on the vehicle side.

A voltage sensor 171 and a current sensor 172 are provided on the vehicle side. Voltage sensor 171 detects a voltage VAC across a pair of power lines provided between charging inlet 270 and LC filter 280, and outputs the detected value to ECU 170. Current sensor 172 detects a current IAC flowing through a power line between DFR 260 and neutral point 112 of first MG 110, and outputs the detected value to ECU 170. It is noted that current sensor 172 may be provided at a power line between DFR 260 and neutral point 122 of second MG 120.

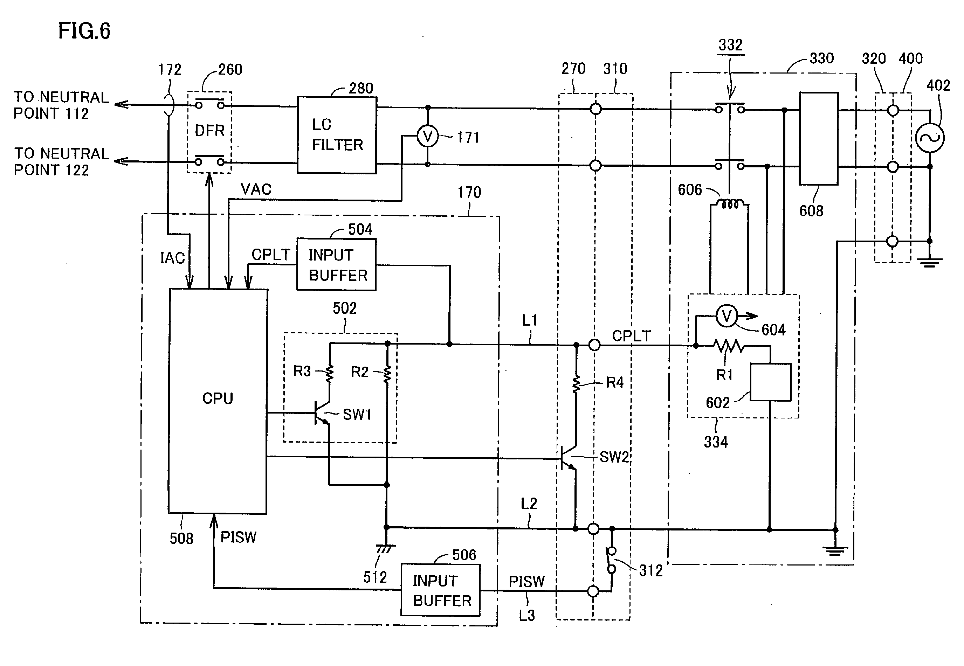

Fig. 6 illustrates the charging mechanism shown in Fig. 4 in more detail. Referring to Fig. 6, CCID 330 includes an electromagnetic coil 606 and a leakage detector 608, in addition to relay 332 and EVSE controller 334. EVSE controller 334 includes an oscillator 602, a resistance element R1 and a voltage sensor 604.

Oscillator 602 outputs a non-oscillating signal when the potential of pilot signal CPLT detected by voltage sensor 604 is around a prescribed potential V1 (for example, 12V), and outputs a signal that oscillates at a prescribed frequency (for example, 1 kHz) and duty cycle, when the potential of pilot signal CPLT is lowered from V1. It is noted that the potential of pilot signal CPLT is manipulated by switching a resistance value in resistance circuit 502 of ECU 170 as will be described hereinafter. In addition, the duty cycle is set based on the rated current that can be supplied from power supply 402 through the charging cable to the vehicle as described above.

When the potential of pilot signal CPLT is lowered to around a prescribed potential V3 (for example, 6V), EVSE controller 334 supplies a current to electromagnetic coil 606. When the current is supplied from EVSE controller 334, electromagnetic coil 606 generates electromagnetic force and relay 332 is turned on.

Leakage detector 608 is provided at a pair of power lines through which charging electric power is supplied from power supply 402 to the plug-in hybrid vehicle, and detects the presence or absence of leakage. Specifically, leakage detector 608 detects the equilibrium of the current flowing through the pair of power lines in the opposite direction, and senses the occurrence of leakage when the equilibrium is broken. It is noted that, although not specifically shown, when the leakage is detected by leakage detector 608, feeding to electromagnetic coil 606 is interrupted and relay 332 is turned off.

On the other hand, ECU 170 includes a resistance circuit 502, input buffers 504 and 506, and a CPU (Control Processing Unit) 508. In addition, charging inlet 270 includes a pull-down resistance R4 and a switch SW2.

Resistance circuit 502 includes pull-down resistances R2, R3 and a switch SW1. Pull-down resistance R2 is connected between a vehicle earth 512 and a control pilot line L1 through which pilot signal CPLT is communicated. Pull-down resistance R3 and switch SW1 are connected in series, and the circuit formed of serially-connected pull-down resistance R3 and switch SW1 is connected in parallel to pull-down resistance R2. Switch SW1 is turned on/off in response to a control signal from CPU 508.

This resistance circuit 502 is for manipulating the potential of pilot signal CPLT. In other words, when connector 310 is connected to charging inlet 270, resistance circuit 502 lowers the potential of pilot signal CPLT to a prescribed potential V2 (for example, 9V) by pull-down resistance R2. In addition, when switch SW1 is turned on in response to the control signal from CPU 508, resistance circuit 502 lowers the potential of pilot signal CPLT to prescribed potential V3 (for example, 6V) by pull-down resistances R2 and R3.

Pull-down resistance R4 and switch SW2 are connected in series, and the circuit formed of serially-connected pull-down resistance R4 and switch SW2 is connected between control pilot line L1 and a ground line L2 connected to vehicle earth 512, In other words, the circuit formed of pull-down resistance R4 and switch SW2 is connected in parallel to resistance circuit 502. Switch SW2 is turned on/off in response to the control signal from CPU 508.

This pull-down resistance R4 is provided to carry out detection of a break in control pilot line L1, and has a resistance value equivalent to that of resistance element R1 in order to lower the potential of pilot signal CPLT to prescribed potential V3, for example. It is noted that this detection of a break in control pilot line L1 by using pull-down resistance R4 will be described later in detail.

Input buffer 504 receives pilot signal CPLT of control pilot line L1, and outputs received pilot signal CPLT to CPU 508. Input buffer 506 receives cable connection signal PISW from a signal line L3 connected to limit switch 312 of connector 310, and outputs received cable connection signal PISW to CPU 508.

It is noted that a voltage is applied to signal line L3 from ECU 170, and when connector 310 is connected to charging inlet 270, limit switch 312 is turned on and the potential of signal line L3 is set to the ground level. In other words, cable connection signal PISW is set to the L (logical low) level when connector 310 is connected to charging inlet 270, and is set to the H (logical high) level when connector 310 is not connected to charging inlet 270.

CPU 508 determines whether or not connector 310 is connected to charging inlet 270, based on cable connection signal PISW received from input buffer 506. In addition, CPU 508 detects the rated current that can be supplied from power supply 402 to the plug-in hybrid vehicle, based on pilot signal CPLT received from input buffer 504.

When the rated current is detected and preparation for charging power storage device 150 is completed, CPU 508 renders the control signal to be output to switch SW1 active. As a result, the potential of pilot signal CPLT is lowered to V3, and relay 332 is turned on in CCID 330. Thereafter, CPU 508 turns on DFR 260. As a result, AC electric power from power supply 402 is provided to neutral point 112 of first MG 110 and neutral point 122 of second MG 120 (both are not shown), and charging control over power storage device 150 is exercised.

When connection of connector 310 and charging inlet 270 is detected based on cable connection signal PISW, CPU 508 carries out detection of a break in control pilot line L1 based on pilot signal CPLT and the detected value of voltage VAC from voltage sensor 171. The detection of a break in control pilot line L1 is carried out as follows.

When the potential of pilot signal CPLT is in the ground level although connection of connector 310 and charging inlet 270 is detected in CPU 508 based on cable connection signal PISW, a break in control pilot line L1 is suspected. There may also be a case, however, where EVSE controller 334 does not generate pilot signal CPLT because of a power failure in power supply 402 and non-connection of plug 320 and power supply outlet 400. Therefore, based on only a simple fact that the potential of pilot signal CPLT is in the ground level, it cannot be determined that a break in control pilot line L1 is occurring.

Thus, in the present embodiment, pull-down resistance R4 for lowering, to prescribed potential V3, the potential of pilot signal CPLT output from EVSE controller 334 is provided at charging inlet 270. When the potential of pilot signal CPLT received by CPU 508 is in the ground level although connection of connector 310 and charging inlet 270 is detected based on cable connection signal PISW, CPU 508 renders the control signal to be output to switch SW2 active.

At this time, if a power failure is not occurring in power supply 402 and plug 320 is connected to power supply outlet 400, the potential of pilot signal CPLT output from EVSE controller 334 is lowered to potential V3 by pull-down resistance R4, and thus, EVSE controller 334 turns on relay 332. Then, electric power is supplied from power supply 402 through charging cable 300 to the vehicle (since DFR 260 is OFF, the electric power is not supplied to neutral points 112 and 122), and the voltage of power supply 402 is detected by voltage sensor 171. When the voltage of power supply 402 is detected by voltage sensor 171, CPU 508 can determine that a break in control pilot line L1 is occurring.

On the other hand, when the voltage of power supply 402 is not detected by voltage sensor 171 although CPU 508 has rendered the control signal to be output to switch SW2 active, CPU 508 can determine that a power failure is occurring in power supply 402 or plug 320 is not connected to power supply outlet 400.

It is noted that, in the present embodiment in which pull-down resistance R4 is provided at charging inlet 270, an area where a break in control pilot line L1 can be detected is located between charging inlet 270 and ECU 170 (for example, a wire harness and the like connecting charging inlet 270 and ECU 170).

It is noted that, when a break in control pilot line L1 is detected, CPU 508 stops charging of power storage device 150 from power supply 402, stores the result of the detection, and outputs a warning of the occurrence of the break to the user.

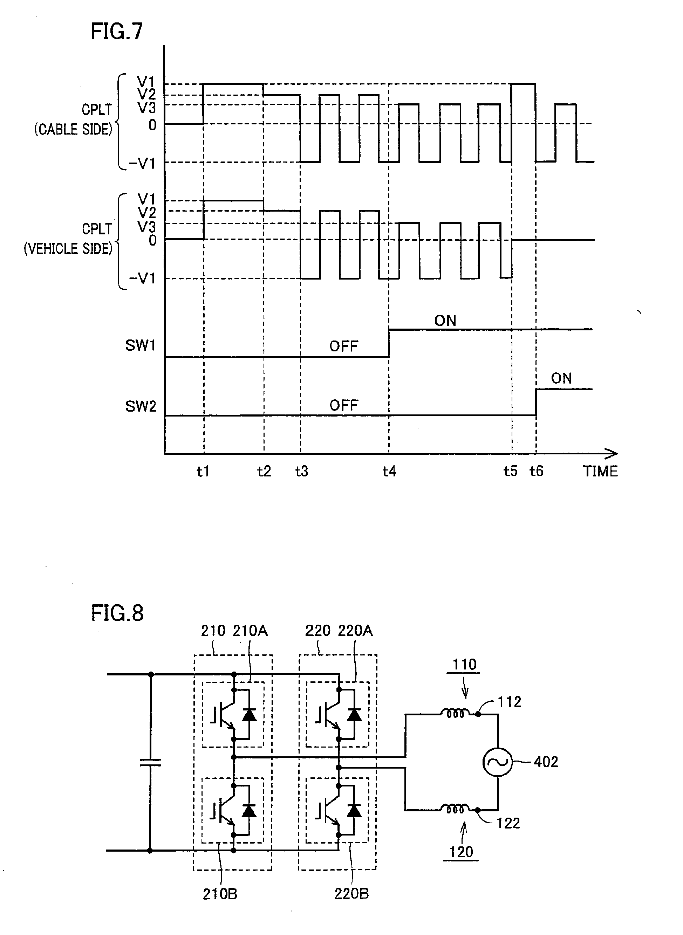

Fig. 7 is a timing chart of pilot signal CPLT and switches SW1 and SW2. It is noted that, in this Fig. 7, "pilot signal CPLT (on the cable side)" refers to the potential of pilot signal CPLT detected by voltage sensor 604 of EVSE controller 334. In addition, "pilot signal CPLT (on the vehicle side)" refers to the potential of pilot signal CPLT detected by CPU 508.

Referring to Figs. 7 and 6, at time t1, when plug 320 of charging cable 300 is connected to power supply outlet 400 of power supply 402, electric power is received from power supply 402 and EVSE controller 334 generates pilot signal CPLT.

It is noted that, at this point, connector 310 of charging cable 300 is not connected to charging inlet 270 on the vehicle side, the potential of pilot signal CPLT is V1 (for example, 12V), and pilot signal CPLT is not oscillating.

At time t2, when connector 310 is connected to charging inlet 270, the potential of pilot signal CPLT is lowered to V2 (for example, 9V) by pull-down resistance R2 of resistance circuit 502. Then, EVSE controller 334 causes pilot signal CPLT to oscillate at time t3. The rated current is detected in CPU 508 based on the duty of pilot signal CPLT, and when preparation for charging control is completed, switch SW1 is turned on by CPU 508 at time t4. Then, the potential of pilot signal CPLT is further lowered to V3 (for example, 6V) by pull-down resistance R3 of resistance circuit 502.

When the potential of pilot signal CPLT is lowered to V3, a current is supplied from EVSE controller 334 to electromagnetic coil 606, and relay 332 of CCID 330 is turned on. Thereafter, DFR 260 is turned on in the vehicle and power storage device 150 is charged from power supply 402.

It is assumed that a break in control pilot line L1 occurs in the vehicle at time t5. Due to the break, the potential of pilot signal CPLT recovers to V1 on the EVSE controller 334 side, and the potential of pilot signal CPLT is set to the ground level on the vehicle side. It is noted that, although not specifically shown, a change in the potential of pilot signal CPLT to V1 causes CCID relay 332 to be turned off

Since the potential of pilot signal CPLT is set to the ground level on the vehicle side although connection of connector 310 and charging inlet 270 is detected based on cable connection signal PISW, switch SW2 is turned on by CPU 508 at time t6. Then, the potential of pilot signal CPLT is lowered to V3 in EVSE controller 334 by pull-down resistance R4, and CCID relay 332 is turned on.

When the voltage of power supply 402 is detected by voltage sensor 171 on the vehicle side although the potential of pilot signal CPLT is in the ground level, it is determined that a break in control pilot line L1 is occurring.

As described above, power storage device 150 is charged from power supply 402 external to the vehicle by using pilot signal CPLT, and in addition, the detection of a break in control pilot line L1 through which pilot signal CPLT is communicated is carried out.

Next, the operation of first inverter 210 and second inverter 220 when power storage device 150 is charged from power supply 402 will be described.

Fig. 8 illustrates a zero-phase equivalent circuit of first and second inverters 210 and 220 as well as first and second MGs 110 and 120 shown in Fig. 3. Each of first inverter 210 and second inverter 220 is formed of a three-phase bridge circuit as shown in Fig. 3, and there are eight patterns of on/off combinations of six switching elements in each inverter. In the two of the eight switching patterns, an interphase voltage becomes zero, and such a voltage state is referred to as a zero voltage vector. The zero voltage vector can be understood that the three switching elements of the upper arm are in the same switching state (all on or off), and similarly, the three switching elements of the lower arm are in the same switching state.

During charging of power storage device 150 from power supply 402 external to the vehicle, the zero voltage vector is controlled in at least one of first and second inverters 210 and 220, based on a zero-phase voltage command generated by voltage VAC detected by voltage sensor 171 (Fig. 4) as well as the rated current notified from EVSE controller 334 by pilot signal CPLT. Therefore, in this Fig. 8, the three switching elements of the upper arm of first inverter 210 are collectively shown as an upper arm 210A, and the three switching elements of the lower arm of first inverter 210 are collectively shown as a lower arm 210B. Similarly, the three switching elements of the upper arm of second inverter 220 are collectively shown as an upper arm 220A, and the three switching elements of the lower arm of second inverter 220 are collectively shown as a lower arm 220B.

As shown in Fig. 8, this zero-phase equivalent circuit can be regarded as a single-phase PWM converter that accepts an input of the single-phase AC electric power provided from power supply 402 to neutral point 112 of first MG 110 and neutral point 122 of second MG 120. Accordingly, by changing the zero voltage vector in at least one of first and second inverters 210 and 220 based on the zero-phase voltage command and controlling switching of first and second inverters 210 and 220 so that first and second inverters 210 and 220 operate as the arms of the single-phase PWM converter, the AC electric power supplied from power supply 402 can be converted to DC electric power and power storage device 150 can be charged.

As described above, in the present embodiment, pull-down resistance R4 for forcibly lowering the potential of pilot signal CPLT output from EVSE controller 334 to prescribed potential V3 is provided at charging inlet 270. Therefore, even if resistance circuit 502 fails to function due to a break in control pilot line L1, lowering of the potential of pilot signal CPLT can be provided to EVSE controller 334. As a result, on the precondition that the vehicle is connected to charging cable 300, the voltage of power supply 402 and pilot signal CPLT can be detected at the same time in the vehicle by turning on relay 332 of CCID 330. When pilot signal CPLT is not detected in CPU 508 although the voltage of power supply 402 is detected by voltage sensor 171, it can be determined that a break in control pilot line L1 is occurring, and when the voltage of power supply 402 is not detected, it can be determined that there is no feeding from power supply 402. Therefore, according to the present embodiment, a break in control pilot line L1 and non-feeding from power supply 402 can be distinguished and detected.

Although pull-down resistance R4 is provided at charging inlet 270 in the above embodiment, pull-down resistance R4 may be provided in EVSE controller 334 or in the immediate vicinity of charging inlet 270 in the wire harness placed between charging inlet 270 and ECU 170. It is noted that, when pull-down resistance R4 is provided in EVSE controller 334, it is required to separately provide a signal line for turning on/off switch SW2 on the vehicle side.

In addition, although the charging electric power supplied from power supply 402 is provided to neutral point 112 of first MG 110 and neutral point 122 of second MG 120 and first and second inverters 210 and 220 are operated as a single-phase PWM converter to charge power storage device 150 in the above embodiment, a charger designed for charging of power storage device 150 from power supply 402 may be separately provided.

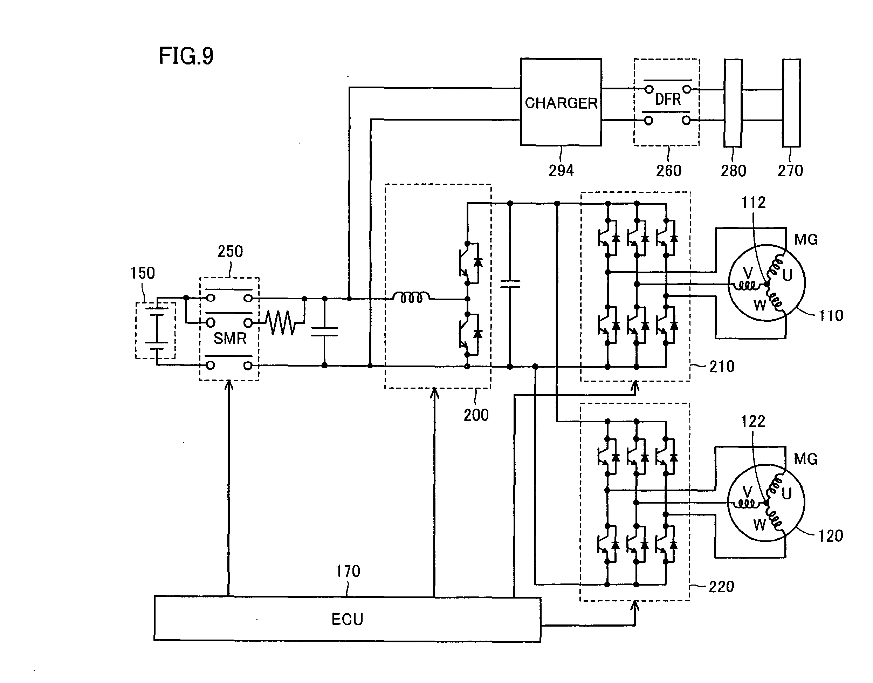

Fig. 9 is an overall configuration diagram of an electrical system in a plug-in hybrid vehicle on which the charger designed for charging of power storage device 150 from power supply 402 is mounted. Referring to Fig. 9, this electrical system further includes a charger 294, as compared with the electrical system shown in Fig. 3. Charger 294 is connected to a power line between SMR 250 and converter 200, and charging port 270 is connected on the input side of charger 294 with DFR 260 and LC filter 280 interposed therebetween. During charging of power storage device 150 from power supply 402, charger 294 converts charging electric power supplied from power supply 402 to a voltage level of power storage device 150 and outputs the charging electric power to power storage device 150, based on a control signal from ECU 170, to charge power storage device 150.

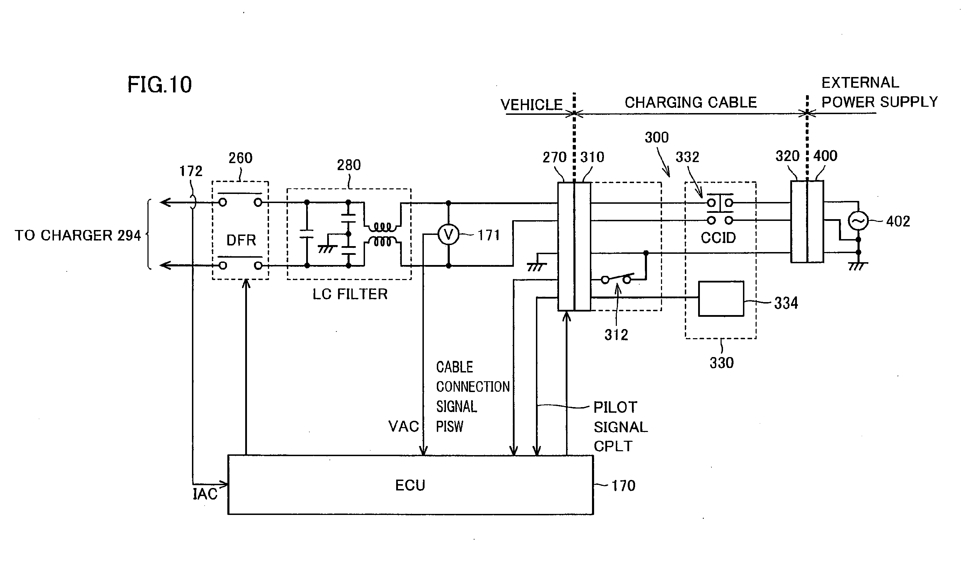

It is noted that, as shown in Fig. 10, a portion related to a charging mechanism of the electrical system shown in Fig. 9 has the same configuration as that of the charging mechanism in the above embodiment shown in Fig. 4.

It is noted that DFR 260 may not be given if charger 294 includes a transformer and the input side of charger 294 is insulated from the output side by the transformer.

In the above embodiment, a series/parallel-type hybrid vehicle has been described, in which motive power of engine 100 is distributed into drive wheel 160 and first MG 110 by employing power split device 130. The present invention, however, is also applicable to other types of hybrid vehicles. In other words, the present invention is also applicable to, for example, a so-called series-type hybrid vehicle using engine 100 only for driving first MG 110 and generating the driving force of the vehicle by employing only second MG 120, a hybrid vehicle in which only regenerative energy among kinetic energy generated by engine 100 is recovered as electric energy, a motor-assisted-type hybrid vehicle in which an engine is used as a main power source and a motor assists the engine as required, and the like.

Furthermore, the present invention is also applicable to a hybrid vehicle that does not include converter 200.

In addition, the present invention is also applicable to an electric vehicle that does not include engine 100 and travels by using only electric power, and a fuel cell vehicle that further includes a fuel cell as a power supply in addition to a power storage device.

It is noted that, in the above, resistance circuit 502 corresponds to an embodiment of "potential manipulating circuit" in the present invention, and pull-down resistance R4 corresponds to an embodiment of "resistance element" in the present invention. In addition, charging inlet 270 corresponds to an embodiment of "vehicle inlet" in the present invention, and switch SW2 corresponds to an embodiment of "switch" in the present invention. Furthermore, relay 332 corresponds to an embodiment of "relay" in the present invention, and voltage sensor 604 corresponds to an embodiment of "first voltage detecting device" in the present invention. Moreover, voltage sensor 171 corresponds to an embodiment of "second voltage detecting device" in the present invention, and CPU 508 corresponds to an embodiment of "abnormality detecting device" in the present invention.

It should be understood that the embodiments disclosed herein are illustrative and not limitative in any respect. The scope of the present invention is defined by the terms of the claims, rather than the above description of the embodiments, and is intended to include any modifications within the scope and meaning equivalent to the terms of the claims.

## Claims

1. A charging control apparatus for a vehicle configured to be capable of charging a vehicle-mounted power storage device (150) for driving the vehicle from a power supply (402) external to the vehicle, comprising:
an EVSE controller (334) provided outside said vehicle and configured to be capable of generating a pilot signal (CPLT) whose potential is manipulated on said vehicle side to allow recognition of a state of said vehicle, and sending said pilot signal (CPLT) to said vehicle;
a potential manipulating circuit (502) mounted on said vehicle, connected to a control pilot line (L1) through which said pilot signal (CPLT) from said EVSE controller (334) is transmitted, and configured to be capable of reducing the potential of said pilot signal (CPLT) to a prescribed potential in accordance with the state of said vehicle; and
a resistance element (R4) provided between said control pilot line (L1) and a ground node and closer to said EVSE controller (334) with respect to a predetermined area where a break in said control pilot line (L1) can be detected, and for lowering a potential of said control pilot line (L1) to said prescribed potential when an abnormality in said pilot signal (CPLT) is sensed in said vehicle.

2. The charging control apparatus for a vehicle according to claim 1, wherein said pilot signal (CPLT) is provided to said vehicle through a charging cable (300) for supplying electric power from said power supply (402) to said vehicle, and
said resistance element (R4) is provided in proximity to a vehicle inlet (270) of said vehicle to which said charging cable (300) is connected.

3. The charging control apparatus for a vehicle according to claim 1, further comprising
a switch (SW2) connected between said control pilot line (L1) and said ground node and in series with said resistance element (R4), and turned on when the abnormality in said pilot signal (CPLT) is sensed in said vehicle.

4. The charging control apparatus for a vehicle according to claim 1, further comprising
a relay (332) provided at a charging cable (300) for supplying electric power from said power supply (402) to said vehicle, and turned on/off in accordance with a provided command, wherein
said EVSE controller (334) includes a first voltage detecting device (604) for detecting the potential of said pilot signal (CPLT), and outputs a connection command to said relay (332) when the potential detected by said first voltage detecting device (604) is lowered to said prescribed potential.

5. The charging control apparatus for a vehicle according to claim 4, further comprising:
a second voltage detecting device (171) for detecting, in said vehicle, a voltage of a power line for inputting the electric power from said power supply (402); and
an abnormality detecting device (508) for detecting the break in said control pilot line (L1) and non-feeding from said power supply (402), based on the voltage detected by said second voltage detecting device (171) and said pilot signal (CPLT).

6. The charging control apparatus for a vehicle according to claim 5, wherein
said abnormality detecting device (508) determines that the break in said control pilot line (L1) is occurring, when there is no input of said pilot signal (CPLT) and the voltage of said power supply (402) is detected by said second voltage detecting device (171).

7. The charging control apparatus for a vehicle according to claim 5, wherein
said abnormality detecting device (508) determines that there is no feeding from said power supply (402), when there is no input of said pilot signal (CPLT) and the voltage of said power supply (402) is not detected by said second voltage detecting device (171).

8. A vehicle configured to be capable of charging a power storage device (150) for driving the vehicle from a power supply (402) external to the vehicle, comprising:
a control pilot line (L1) for transmitting a pilot signal (CPLT) generated outside the vehicle and whose potential is manipulated in the vehicle to allow recognition of a state of the vehicle outside the vehicle;
a potential manipulating circuit (502) connected to said control pilot line (L1) and configured to be capable of reducing the potential of said pilot signal (CPLT) to a prescribed potential in accordance with the state of the vehicle; and
a resistance element (R4) provided between said control pilot line (L1) and a ground node and closer to a terminal for inputting said pilot signal (CPLT) from outside the vehicle with respect to a predetermined area where a break in said control pilot line (L1) can be detected, and for lowering a potential of said control pilot line (L1) to said prescribed potential when an abnormality in said pilot signal (CPLT) is sensed.

9. The vehicle according to claim 8, wherein
said pilot signal (CPLT) is provided to the vehicle through a charging cable (300) for supplying electric power from said power supply (402) to the vehicle, and
said resistance element (R4) is provided in proximity to a vehicle inlet (270) to which said charging cable (300) is connected.

10. The vehicle according to claim 8, further comprising
a switch (SW2) connected between said control pilot line (L1) and the ground node and in series with said resistance element (R4), and turned on when the abnormality in said pilot signal (CPLT) is sensed.

11. The vehicle according to claim 8, further comprising:
a voltage detecting device (171) for detecting a voltage of a power line for inputting electric power from said power supply (402); and
an abnormality detecting device (508) for detecting the break in said control pilot line (L1) and non-feeding from said power supply (402), based on the voltage detected by said voltage detecting device (171) and said pilot signal (CPLT).

12. The vehicle according to claim 11, wherein
said abnormality detecting device (508) determines that the break in said control pilot line (L1) is occurring, when there is no input of said pilot signal (CPLT) and the voltage of said power supply (402) is detected by said voltage detecting device (171).

13. The vehicle according to claim 11, wherein
said abnormality detecting device (508) determines that there is no feeding from said power supply (402), when there is no input of said pilot signal (CPLT) and the voltage of said power supply (402) is not detected by said voltage detecting device (171).

14. The vehicle according to claim 8, further comprising
a charger (294) for converting electric power supplied from said power supply (402) to a voltage level of said power storage device (150) and charging said power storage device (150).
